# EUROPEAN PATENT SPECIFICATION

(11) **EP 4 027 317 B1**
(45) Date of publication and mention of the grant of the patent: **06.05.2026**
(21) Application number: 20879883.5
(22) Date of filing: 17.07.2020
(51) Int. Cl.: G08G 1/16, G08G 1/0967, G06V 20/58, H04W 4/44, H04W 4/46, B60W 60/00

(54) **METHOD AND SYSTEM FOR PREDICTING MOTION TRAJECTORY**
VERFAHREN UND SYSTEM ZUR VORHERSAGE EINER BEWEGUNGSBAHN
PROCÉDÉ ET SYSTÈME DE PRÉDICTION DE TRAJECTOIRE DE MOUVEMENT

(30) Priority: 26.10.2019 CN 201911026823; 19.03.2020 CN 202010197477
(43) Date of publication of application: 13.07.2022
(73) Proprietor: Shenzhen Yinwang Intelligent Technologies Co., Ltd., Shenzhen, Guangdong 518129 (CN)
(72) Inventor: SHEN, Zeshu, Shenzhen, Guangdong 518129 (CN)
(74) Representative: Pfenning, Meinig & Partner mbB
(86) International application number: PCT/CN2020/102512
(87) International publication number: WO 2021/077818

(56) References cited:
- CN-A- 101 655 561
- CN-A- 105 160 356
- CN-A- 109 635 855
- CN-A- 109 657 928
- CN-A- 109 949 570
- CN-U- 202 512 237
- US-A1- 2013 253 816
- US-A1- 2018 188 738
- US-A1- 2019 064 839
- US-A1- 2019 204 843
- US-A1- 2019 287 394
- US-B1- 7 719 461

## Description

### TECHNICAL FIELD

This application relates to the intelligent driving (intelligent driving) field, and in particular, to a motion trajectory prediction method and a system.

### BACKGROUND

Intelligent driving has great potential in reducing traffic accidents, alleviating traffic congestion, and improving road utilization, and has become a competitive hot spot for many enterprises. The intelligent driving means that a vehicle can intelligently perform perception, determining, inference, decision, and memorization like a human being, and intelligently control or drive the vehicle. A vehicle having an intelligent driving capability is referred to as an intelligent vehicle. The intelligent vehicle can implement active prediction and control, and can perform man-machine interaction and coordination. An important technology for implementing intelligent driving is to predict a motion trajectory of a target in a surrounding environment of the intelligent vehicle in a future time period, and then decide or adjust a motion trajectory, a running speed, and the like of the intelligent vehicle based on the motion trajectory of the surrounding target (for example, based on the motion trajectory of the target in the surrounding environment, determine when to change a lane, determine a traveling speed, and determine whether to perform avoidance). Accuracy of predicting a motion trajectory of another surrounding target is closely related to traveling safety of the intelligent vehicle.

In a related method for predicting a motion trajectory of a target in a surrounding environment, information about the target in the surrounding environment is usually perceived based on a sensor system of the intelligent vehicle, and a motion model is constructed based on the information about the target to predict a motion trajectory of the target in a future time period. A prediction result that is of the motion trajectory of the target and that is obtained by using this method has relatively low accuracy, and therefore, traveling safety of the intelligent vehicle cannot be ensured. How to predict a motion trajectory more accurately becomes an urgent problem to be resolved in the intelligent driving field.

US 2018/188738 A1 discloses a system and method for dynamic object identification and environmental changes for use with autonomous vehicles. For efficient detection of changes for autonomous, or partially autonomous vehicles, embodiments may use a technique based on background removal and image subtraction which use motion detection rather than full object identification for all objects in an image. Road side units proximate to a road segment or virtual road side units in the cloud, other vehicles or mobile device (e.g., drones) are used to retrieve and store background images for a road segment, to be used by the autonomous vehicle.

US 2019/287394 A1 discloses a Roadside Equipment (RSE) located at an intersection of a transportation network. The RSE includes an input to receive data from a sensor oriented to monitor ground transportation entities at or near the intersection. A wireless communication device sends to a device of one of the ground transportation entities, a warning about a dangerous situation at or near the intersection.

### SUMMARY

This application provides a motion trajectory prediction method defined in claim 1. In the method, an to-be-applied motion trajectory of a first target is determined based on types of N motion trajectories of the first target, so that the obtained to-be-applied motion trajectory of the first target is more accurate. This further improves traveling safety of an intelligent vehicle.

According to a first aspect, this application provides the motion trajectory prediction method of claim 1.

In a possible implementation of the first aspect, the N motion trajectories are from N motion trajectory sets provided by the N devices, each motion trajectory set includes motion trajectories that are of M targets and that are collected by each device, and M is a positive integer.

According to claim 1, a type of a motion trajectory includes a prediction trajectory type and a planning trajectory type, the prediction trajectory type indicates that the motion trajectory is a motion trajectory obtained by a device by performing prediction based on information about a target that is perceived by the device, and the planning trajectory type indicates that the motion trajectory is a motion trajectory obtained by the target by planning traveling of the target based on a traveling trajectory of another target around the target.

According to the invention, the determining an to-be-applied motion trajectory of the first target based on types of the N motion trajectories includes: when all of the types of the N motion trajectories are the prediction trajectory type, and N is greater than 1, determining a confidence level of each motion trajectory; and fusing the N motion trajectories based on the confidence level of each motion trajectory, to obtain the to-be-applied motion trajectory of the first target.

In the foregoing method, the N motion trajectories are fused based on the confidence level of each motion trajectory. This avoids simple fusion of a plurality of motion trajectories from an algorithm perspective, so that the to-be-applied motion trajectory that is of the first target and that is obtained after the fusion is more accurate.

In a possible implementation of the first aspect not covered by the claims, the determining an to-be-applied motion trajectory of the first target based on types of the N motion trajectories includes: when all of the types of the N motion trajectories are the prediction trajectory type, and N is equal to 1, obtaining a motion trajectory predicted by a motion model for the first target, where the motion model is constructed based on a historical motion trajectory of the first target; and fusing the N motion trajectories and the motion trajectory predicted by the motion model for the first target, to obtain the to-be-applied motion trajectory of the first target. In the foregoing manner, reception of an obviously jumping or forged motion trajectory can be avoided, and accuracy of the obtained to-be-applied motion trajectory of the first target can be improved.

According to the invention, the determining an to-be-applied motion trajectory of the first target based on types of the N motion trajectories includes: when the types of the N motion trajectories include the planning trajectory type, determining a motion trajectory whose type is the planning trajectory type in the N motion trajectories as the to-be-applied motion trajectory of the first target.

In the foregoing case, because the N obtained motion trajectories include the motion trajectory planned by the first target for the first target, it may be considered that the planned motion trajectory has highest accuracy, and no further fusion with another predicted motion trajectory is required to improve accuracy. Using the planning trajectory type as the to-be-applied motion trajectory of the first target can improve safety of the intelligent vehicle.

In a possible implementation of the first aspect, before the determining an to-be-applied motion trajectory of the first target based on types of the N motion trajectories, the method further includes: performing security detection on the N motion trajectories, and discarding an untrusted motion trajectory of the first target. In this method, it can be avoided that traveling decision of the intelligent vehicle is affected because an obviously incorrect or forged motion trajectory is received.

In a possible implementation of the first aspect, the method further includes: obtaining L motion trajectory sets, where L is greater than or equal to N; determining a region of interest ROI of the intelligent vehicle based on traveling information of the intelligent vehicle; screening, based on the ROI, out a motion trajectory that is not in the ROI in each motion trajectory set; and obtaining the N motion trajectories of the first target based on L motion trajectory sets obtained after screening.

In a possible implementation of the first aspect, the confidence level of each motion trajectory is a confidence level of a motion trajectory set to which each motion trajectory belongs; and the method further includes: calculating a degree of matching between a motion trajectory of a target in each motion trajectory set in a previous period and a motion trajectory of a corresponding target in an to-be-applied motion trajectory set in the previous period; and determining, based on the matching degree, a confidence level of a motion trajectory set to which each motion trajectory in a current period belongs. A confidence level of each motion trajectory set is adjusted or determined based on a degree of matching between a motion trajectory in a motion trajectory set in the previous period and a motion trajectory in the to-be-applied motion trajectory set, so that a more accurate confidence level can be obtained.

In a possible implementation of the first aspect, the confidence level of each motion trajectory is a confidence level of a motion trajectory set to which each motion trajectory belongs, and the confidence level of the motion trajectory set to which each motion trajectory belongs is determined based on an attribute of a device corresponding to the motion trajectory set. Because an inherent attribute of a device affects a confidence level of a motion trajectory set generated by the device, determining the confidence level based on the attribute of the device can make the obtained confidence level better conform to an actual situation.

According to a second aspect, this application further provides anapparatus of claim 7.

In a possible implementation of the second aspect, the N motion trajectories are from N motion trajectory sets provided by the N devices, each motion trajectory set includes motion trajectories that are of M targets and that are collected by each device, and M is a positive integer.

In a possible implementation of the second aspect, a type of a motion trajectory includes a prediction trajectory type and a planning trajectory type, the prediction trajectory type indicates that the motion trajectory is a motion trajectory obtained by a device by performing prediction based on information about a target that is perceived by the device, and the planning trajectory type indicates that the motion trajectory is a motion trajectory obtained by the target by planning traveling of the target based on a traveling trajectory of another target around the target.

In a possible implementation of the second aspect, when all of the types of the N motion trajectories are the prediction trajectory type, and N is greater than 1, the processing unit is specifically configured to: determine a confidence level of each motion trajectory; and fuse the N motion trajectories based on the confidence level of each motion trajectory, to obtain the to-be-applied motion trajectory of the first target.

In a possible implementation of the second aspect not covered by the claims, when all of the types of the N motion trajectories are the prediction trajectory type, and N is equal to 1, the processing unit is specifically configured to: obtain a motion trajectory predicted by a motion model for the first target, where the motion model is constructed based on a historical motion trajectory of the first target; and fuse the N motion trajectories and the motion trajectory predicted by the motion model for the first target, to obtain the to-be-applied motion trajectory of the first target.

In a possible implementation of the second aspect, when the types of the N motion trajectories include the planning trajectory type, the processing unit is specifically configured to determine a motion trajectory whose type is the planning trajectory type in the N motion trajectories as the to-be-applied motion trajectory of the first target.

In a possible implementation of the second aspect, the processing unit is further configured to: perform security detection on the N motion trajectories, and discard an untrusted motion trajectory of the first target.

In a possible implementation of the second aspect, the processing unit is further configured to: obtain L motion trajectory sets, where L is greater than or equal to N; determine a region of interest ROI of the intelligent vehicle based on traveling information of the intelligent vehicle; screen, based on the ROI, out a motion trajectory that is not in the ROI in each motion trajectory set; and obtain the N motion trajectories of the first target based on L motion trajectory sets obtained after screening.

In a possible implementation of the second aspect, the confidence level of each motion trajectory is a confidence level of a motion trajectory set to which each motion trajectory belongs; and the processing unit is further configured to: calculate a degree of matching between a motion trajectory of a target in each motion trajectory set in a previous period and a motion trajectory of a corresponding target in an to-be-applied motion trajectory set in the previous period; and determine, based on the matching degree, a confidence level of a motion trajectory set to which each motion trajectory in a current period belongs.

In a possible implementation of the second aspect, the confidence level of each motion trajectory is a confidence level of a motion trajectory set to which each motion trajectory belongs, and the confidence level of the motion trajectory set to which each motion trajectory belongs is determined based on an attribute of a device corresponding to the motion trajectory set.

According to a third aspect, this application further provides an in-vehicle apparatus, the in-vehicle apparatus is disposed in a vehicle, and the in-vehicle apparatus is configured to perform the method according to any one of the first aspect or the possible implementations of the first aspect.

According to a fourth aspect, this application further provides a device of claim 8, including a processor and a memory, where the memory stores program code, and the processor executes the program code, so that the device is enabled to perform the method according to any one of the first aspect or the possible implementations of the first aspect.

According to a fifth aspect, this application further provides a vehicle. The vehicle includes a storage unit and a processing unit, the storage unit of the vehicle is configured to store a group of computer instructions and a data set, the processing unit executes the computer instructions stored in the storage unit, and the processing unit reads the data set in the storage unit, so that the vehicle is enabled to perform the method according to any one of the first aspect or the possible implementations of the first aspect.

According to a sixth aspect, this application provides a computer-readable storage medium of claim 9. The computer-readable storage medium stores computer program code, and when the computer program code is executed by a computing device, the computing device performs the method according to any one of the first aspect or the possible implementations of the first aspect. The storage medium includes but is not limited to a volatile memory, for example, a random access memory or a non-volatile memory, for example, a flash memory, a hard disk drive (English: hard disk drive, HDD for short), or a solid state drive (English: solid state drive, SSD for short).

According to a seventh aspect, this application provides a computer program product of claim 10, where the computer program product includes computer program code, and when the computer program code is executed by a computing device, the computing device performs the method according to the first aspect or any possible implementation of the first aspect. The computer program product may be a software installation package. When the method according to any one of the first aspect or the possible implementations of the first aspect needs to be used, the computer program product may be downloaded to and executed on the computing device.

### BRIEF DESCRIPTION OF DRAWINGS

FIG. 1 is a schematic diagram of an application scenario according to an embodiment of this application;
FIG. 2 is a schematic diagram of a system architecture according to an embodiment of this application;
FIG. 3 is a flowchart of a motion trajectory prediction method according to an embodiment of this application;
FIG. 4 is a schematic diagram of three cases of security detection according to an embodiment of this application;
FIG. 5 is a schematic diagram of three cases of obtaining an to-be-applied motion trajectory according to an embodiment of this application;
FIG. 6 is a schematic diagram of a structure of an apparatus 600 according to an embodiment of this application; and
FIG. 7 is a schematic diagram of a structure of a device 800 according to an embodiment of this application.

### DESCRIPTION OF EMBODIMENTS

The following specifically describes the embodiments provided in this application with reference to the accompanying drawings.

To describe the technical solutions in the embodiments of this application more clearly, the following explains some terms.

Target: In the embodiments of this application, a target refers to a moving object on or around a road, for example, a pedestrian or a vehicle.

A motion trajectory represents a route of a target moving on a road, and the motion trajectory of the target includes a motion trajectory that is of the target and that may be formed in a future time period from a current moment, and/or a motion trajectory that is of the target and that is formed in a historical time period before the current moment. The motion trajectory of the target may include a sequence. The sequence includes a group of location information and a corresponding group of time information. Each piece of location information in the sequence is corresponding to one piece of time information, and indicates a geographical location of the target at a specific time. Optionally, the motion trajectory of the target may further include detected attribute information of the target, and the attribute information of the target may include type information of the target, color information of the target, shape information of the target, and the like. It should be understood that the future time period in this application represents a time period after the current moment, for example, 30 seconds in the future or 1 minute in the future.

An intelligent vehicle is a vehicle that has an environment perception capability, a planning and decision capability, an assisted driving capability, or an autonomous driving capability. The intelligent vehicle may further communicate with another device.

A road side unit (road side unit, RSU) refers to a device that is disposed near a road and that has a perception capability and a computing capability. The road side unit includes a sensor system, and may obtain information about a target in a surrounding environment by using the sensor system. The road side unit may further communicate with another device.

Perception area: A geographical range that can be perceived by a sensor system of a device is referred to as a perception area of the device.

Fusion is a process in which a plurality of groups of information are processed in a specific manner (for example, by using a fusion algorithm) to obtain one group of information. Fusion may include obtaining one group of new information based on a plurality of groups of source information, determining one group of source information from a plurality of groups of source information, or performing splicing based on a plurality of groups of source information to obtain one group of new information including content of the plurality of groups of source information.

Vehicle to everything (vehicle to everything, V2X) technology: The V2X technology is a technology that enables a vehicle to establish communication connections to all things that may be associated with the vehicle in a surrounding environment of the vehicle. V2X is also referred to as the Internet of vehicles.

The V2X technology specifically includes a vehicle to vehicle (vehicle to vehicle, V2V) technology for establishing a communication connection between a vehicle and a surrounding vehicle, a vehicle to infrastructure (vehicle to infrastructure, V2I) technology for establishing a communication connection between a vehicle and a traffic facility such as a surrounding traffic signal light, bus stop, utility pole, building, overpass, tunnel, or barricade, a vehicle to pedestrian (vehicle to pedestrian, V2P) technology for establishing a communication connection between a vehicle and an intelligent device such as a smartphone of a pedestrian, and a vehicle to network (vehicle to network, V2N) technology for establishing a communication connection between a vehicle and the Internet. There are a plurality of implementations of the V2X technology: 1. a dedicated short-range communications (dedicated short-range communications, DSRC) technology; 2. a Long Term Evolution (long term evolution, LTE) V2X technology, namely, a V2X communications technology based on a mobile cellular network.

Intelligent driving is a main trend of smart cities and smart transportation. According to an intelligent driving technology, an intelligent vehicle can automatically perform perception, analysis, and decision, to implement unmanned driving or intelligent assisted driving. In an actual scenario, when the intelligent vehicle travels on a road, there may be various moving objects such as another vehicle, a pedestrian, and an animal around the intelligent vehicle. A motion trajectory of a target in a surrounding environment of the intelligent vehicle greatly affects traveling decision of the intelligent vehicle.

In a related technology, the intelligent vehicle can perceive information about the target in the surrounding environment in real time by using a sensor system mounted on the intelligent vehicle, predict a motion trajectory of the target based on the perceived information about the target, and then make a decision for traveling of the self-vehicle based on the predicted motion trajectory of the target. In this manner, there are at least the following problems: 1. A range that can be perceived by the sensor system of the intelligent vehicle is limited, and there may be a case in which some targets greatly affect traveling of the intelligent vehicle but the sensor system of the intelligent vehicle cannot perceive these targets. Consequently, traveling trajectories of these targets cannot be considered for traveling decision of the intelligent vehicle, resulting in a potential traveling risk of the intelligent vehicle. 2. The sensor system of the intelligent vehicle may inaccurately perceive information about some targets. Consequently, a predicted motion trajectory of a target has a relatively large error, then traveling decision of the intelligent vehicle is affected, and a safety accident probably occurs.

To resolve the foregoing problems, this application provides a motion trajectory prediction method. The method may be performed by an intelligent vehicle, and more specifically, the method may be performed by an in-vehicle computing system of the intelligent vehicle. In the method, a motion trajectory set sent by another device (for example, a road side unit having a communication capability and a perception capability, or a vehicle having a communication capability and/or a perception capability) on a road is received, and a motion trajectory of a target is determined and processed with reference to the motion trajectory set obtained by the intelligent vehicle by using a sensor system and the in-vehicle computing system of the self-vehicle, to obtain a more accurate motion trajectory of the surrounding target.

Before the motion trajectory prediction method in this application is specifically described, an application scenario and a system architecture are first described.

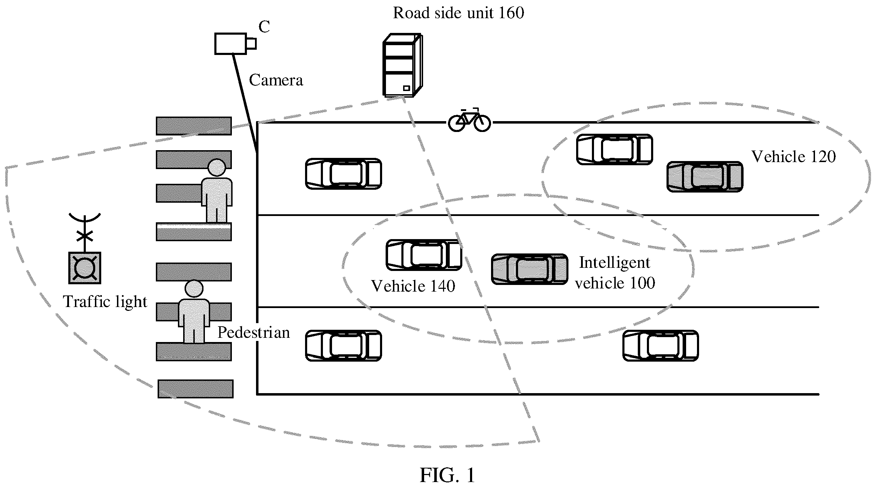

As shown in FIG. 1, in an application scenario, when an intelligent vehicle 100 travels on a road, a target around the intelligent vehicle 100 includes a vehicle 120 (for example, an intelligent vehicle) that has a perception capability and a communication capability. Such a vehicle can perceive information about another target around the vehicle by using a sensor system, and predict a motion trajectory of each target by using an in-vehicle computing system, to obtain a motion trajectory set. The vehicle 120 may broadcast the motion trajectory set by using a communications system, so that the intelligent vehicle 100 can obtain the motion trajectory set computed by the vehicle 120. Alternatively, the vehicle 120 may send the motion trajectory set to the intelligent vehicle 100 by using a communications system. As shown in FIG. 1, there may further be a vehicle 140 that does not have a perception capability but has a computing capability and a communication capability on the road. Such a vehicle may send a motion trajectory of the vehicle to the intelligent vehicle. There may further be a road side unit 160 around the road. The road side unit 160 also has a perception capability, a computing capability, and a communication capability. The road side unit 160 may send, to the intelligent vehicle 100, a motion trajectory set including a motion trajectory of a target around the intelligent vehicle 100. There are also targets such as a vehicle or a pedestrian without a perception capability or a communication capability on the road. Motion trajectories of these targets may be obtained by targets such as the intelligent vehicle 100, the vehicle 120, and the road side unit 160. In this way, the intelligent vehicle 100 can obtain motion trajectories of more targets in a surrounding environment to a greater extent (for example, obtain motion trajectories of targets in a larger geographical range).

It should be understood that, in some embodiments, the intelligent vehicle 100 may communicate with another device in the surrounding environment by using a V2X technology. In this way, the intelligent vehicle 100 can obtain a motion trajectory of a surrounding target in real time or almost in real time. The obtained motion trajectory of the surrounding target is a motion trajectory that is computed and predicted by the intelligent vehicle or a device sending the motion trajectory and that is of the target in a future time period from a current moment. Optionally, the motion trajectory that is of the target and that is obtained by the intelligent vehicle may further include a motion trajectory of the target in a historical time period.

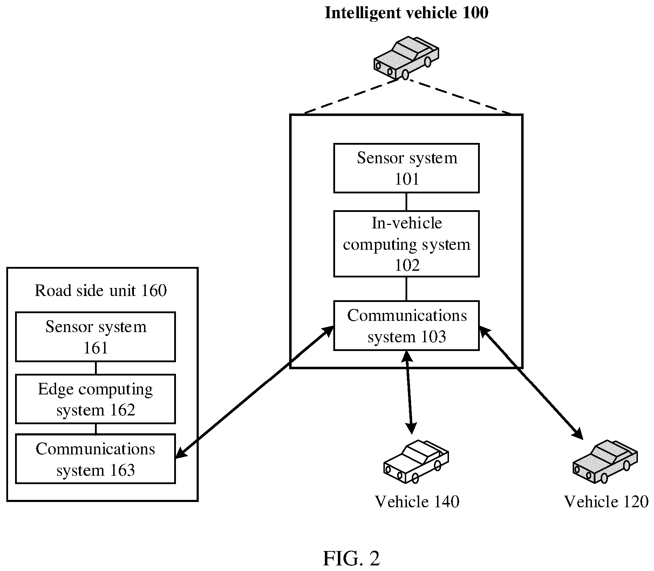

According to the foregoing application scenario shown in FIG. 1, FIG. 2 shows a structure of the intelligent vehicle 100 and a structure of a device sending a motion trajectory set to the intelligent vehicle 100. As shown in FIG. 2, the intelligent vehicle 100 includes a sensor system 101, an in-vehicle computing system 102, and a communications system 103.

The sensor system 101 is configured to detect and perceive a target in a surrounding environment of the intelligent vehicle, to obtain information about the target in the surrounding environment in real time. The sensor system 101 may include a plurality of types of hardware sensors or software sensors. For example, the sensor system 101 may include any one or more types of a camera, a laser radar, a millimeter wave radar, an ultrasonic radar, and an infrared sensor. There may be one or more sensors of each type in the sensor system 101.

The in-vehicle computing system 102 is configured to: obtain, from the sensor system 101, the information about the target perceived by the sensor system 101, analyze and process the information about the target, and predict a motion trajectory of the target. The in-vehicle computing system 102 is further configured to: obtain a motion trajectory set that is sent by another device and that is received by the communications system 103, and analyze and process a motion trajectory of each target in the motion trajectory set of the another device with reference to the motion trajectory that is of the target and that is obtained by the intelligent vehicle. Finally, the in-vehicle computing system 102 obtains a more accurate full motion trajectory set. The in-vehicle computing system 102 may further decide and control traveling of the intelligent vehicle 100 based on a motion trajectory of a target in the full motion trajectory set.

The communications system 103 is configured to communicate with another device that is around the intelligent vehicle 100 and that has a communication capability (for example, a vehicle traveling on a road, a road side unit around a road, or a data center). The communications system 103 may communicate with the another device by using a plurality of communications technologies, for example, a 4th generation mobile communications technology (4G) and a 5th generation mobile communications technology (5G). More specifically, in some embodiments, a V2X unit is installed in the communications system 103, and a V2X technology may be used to implement quicker and more real-time communication with another vehicle or a road side unit on a road.

As shown in FIG. 2, in some embodiments of this application, the communications system 103 of the intelligent vehicle 100 may receive a motion trajectory set sent by the vehicle 120. The motion trajectory set sent by the vehicle 120 includes a motion trajectory of a target perceived by a sensor system of the vehicle 120 and a motion trajectory of the vehicle 120. The communications system 103 may further receive a motion trajectory of the vehicle 140 that is sent by the vehicle 140. The communications system 103 may further receive a motion trajectory set sent by a communications system 163 of the road side unit 160. The motion trajectory set sent by the road side unit 160 includes a motion trajectory of a target perceived by the road side unit 160.

For a structure of the vehicle 120, refer to the structure of the intelligent vehicle 100. Details are not described herein. The vehicle 140 may include an in-vehicle computing system and a communications system. The road side unit 160 includes a sensor system 161, an edge computing system 162, and the communications system 163. A function of the sensor system 161 is similar to that of the sensor system 101 of the intelligent vehicle 100, a function of the edge computing system 162 is similar to that of the in-vehicle computing system 102, and a function of the communications system 163 is similar to that of the communications system 103. Details are not described herein.

It can be learned from the foregoing that, the intelligent vehicle 100 may obtain a motion trajectory set that includes a motion trajectory of at least one target and that is obtained by the self-vehicle through perception and computing, and may further obtain a motion trajectory set that is of a target and that is sent by another device. In some cases, the intelligent vehicle 100 may obtain motion trajectories of a same target on a road from a plurality of motion trajectory sets. For such a target, the intelligent vehicle 100 may fuse the plurality of motion trajectories of the target, to obtain a more accurate motion trajectory corresponding to such a target. In some other cases, the intelligent vehicle 100 may obtain motion trajectories of some targets that are not perceived by the self-vehicle. For such targets, the intelligent vehicle 100 performs security determining on the motion trajectories of the targets, and then performs processing. In the method provided in this application, each target in a motion trajectory set obtained by the intelligent vehicle is analyzed, and different processing is performed for different cases, to finally obtain a more accurate full motion trajectory set.

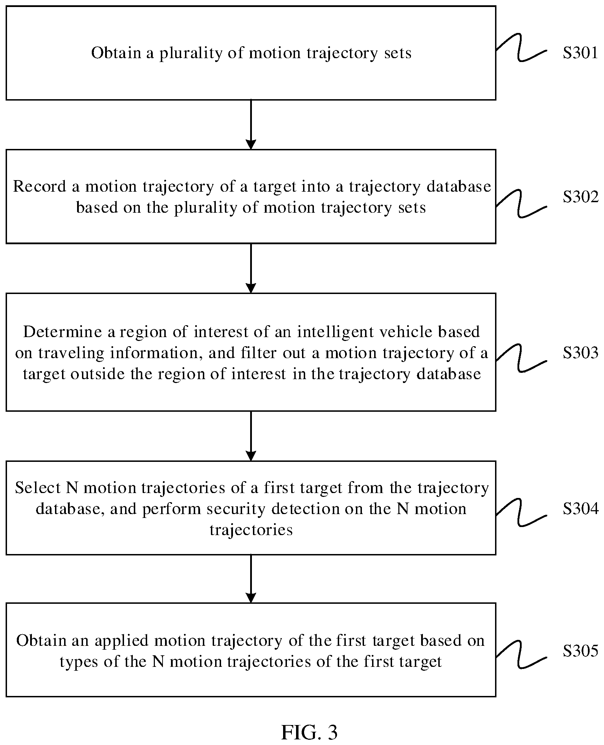

With reference to FIG. 3, the following describes a specific implementation of predicting a motion trajectory according to this application. This method may be performed by the foregoing in-vehicle computing system 103.

S301: Obtain a plurality of motion trajectory sets.

Specifically, the plurality of motion trajectory sets include a motion trajectory set sent by a device such as a vehicle on a road or a road side unit to an intelligent vehicle, and further include a motion trajectory set obtained by the intelligent vehicle through computing based on information about a target in a perception area of the self-vehicle. Each motion trajectory set is provided by a different device, and each motion trajectory set includes a motion trajectory of at least one target.

Each motion trajectory set may include a motion trajectory that is obtained by a device corresponding to the motion trajectory set through prediction based on information about a target in a perception area of the device and that is of the target, and/or may further include a motion trajectory obtained by the device through planning on the device. When the motion trajectory set includes the motion trajectory planned by the device, an identifier may be set for the motion trajectory planned by the device. In this way, a motion trajectory can be clearly determined as the planned trajectory in the motion trajectory set by using the identifier. Optionally, when the motion trajectory set includes the motion trajectory obtained by the device through prediction, an identifier may be set for the predicted motion trajectory. In this way, a motion trajectory can be clearly determined as the predicted trajectory in the motion trajectory set by using the identifier.

A motion trajectory set A sent by a vehicle A around the intelligent vehicle is used as an example. The vehicle A is a vehicle that has both a communication capability and a perception and computing capability. A perception area of the vehicle A includes a target 1, a target 2, and a target 3. The vehicle A may obtain real-time information about the moving target 1, target 2, and target 3 in the perception area by using a sensor system mounted on the vehicle A. The information includes real-time location information, speed information, orientation information, type information, feature information, and the like of the targets. The vehicle A may separately predict motion trajectories of the target 1, the target 2, and the target 3 in a future time period based on the obtained information about the target 1, the target 2, and the target 3. In addition, the vehicle A may plan a motion trajectory of the vehicle A in the future time period based on the predicted motion trajectories of the three targets in the perception area, to obtain the motion trajectory of the vehicle A. In this way, the motion trajectory set A that may be sent by the vehicle A to the intelligent vehicle includes the motion trajectories of the target 1, the target 2, and the target 3, and further includes the motion trajectory of the vehicle A.

It should be understood that a vehicle on a road or a road side unit may periodically broadcast a motion trajectory set obtained by a device of the vehicle or the road side unit through computing. A motion trajectory included in the broadcast motion trajectory set includes a motion trajectory of a target in a further time period from a current moment. Optionally, the broadcast motion trajectory set may further include a motion trajectory of the target in a historical time period. This embodiment of this application describes processing performed by the intelligent vehicle on a motion trajectory of a target in the obtained motion trajectory set in a specific period (a current period). It should be understood that a period in this application may be a period of time, for example, 1 minute or 30 seconds. The current period in this application may be a period of time that includes the current moment.

Optionally, the foregoing process of obtaining the plurality of motion trajectory sets may further include: performing authentication on a motion trajectory set sent by another device to the intelligent vehicle, receiving a valid motion trajectory set on which authentication succeeds, and discarding an invalid motion trajectory set on which authentication fails.

A specific authentication manner is not limited in this embodiment of this application, and authentication on traffic situation information may be performed in a common authentication manner in the industry, for example, an authentication method in which a public key and a private key are used for encryption and decryption. Specifically, the intelligent vehicle may generate a pair of a public key and a private key, and publish the public key to a valid surrounding vehicle or road side unit. When the surrounding vehicle or the road side unit sends a motion trajectory set to the intelligent vehicle, the original motion trajectory set is encrypted by using the public key published by the intelligent vehicle, and the encrypted motion trajectory set is sent to the intelligent vehicle. The intelligent vehicle performs decryption and authentication by using the private key. When the obtained motion trajectory set is successfully decrypted by using the private key, it may be considered that the received motion trajectory set is authenticated to be valid.

Performing authentication on the received motion trajectory set can greatly reduce a safety risk of the intelligent vehicle. For example, a malicious transmit end can be prevented from sending an incorrect motion trajectory set to the intelligent vehicle, so as to avoid a traffic accident caused by incorrect planning or control performed by the intelligent vehicle based on received incorrect information. In addition, performing authentication on the received motion trajectory set can further avoid a problem that the intelligent vehicle cannot learn that the motion trajectory set is maliciously tampered in a transmission process, so that safety of the intelligent vehicle is greatly improved.

Optionally, a content format of each of the foregoing plurality of obtained motion trajectory sets may follow a standardized format. In this way, the intelligent vehicle may extract information according to the standardized format.

S302: Record a motion trajectory of a target into a trajectory database based on the plurality of motion trajectory sets.

Specifically, the foregoing plurality of obtained motion trajectory sets may include a plurality of motion trajectories of a same target on or around a road. After the plurality of motion trajectory sets are obtained, each motion trajectory in the plurality of motion trajectory sets may be projected to a map. To be specific, each motion trajectory is represented on the map based on information about a sequence of each motion trajectory. After all motion trajectories are projected to the map, for several motion trajectories that completely overlap or highly overlap on the map, it may be considered that these motion trajectories are motion trajectories formed after a same target is predicted or planned by different devices. Based on the motion trajectory on the map, one or more motion trajectories corresponding to each target are recorded in the trajectory database by using a target sequence number as an index.

In the foregoing method for determining that several motion trajectories completely overlap or highly overlap on the map, motion trajectory curves may be obtained by fitting the motion trajectories, then an overlapping degree of two motion trajectory curves is calculated (for example, by using a least square method), and two motion trajectory curves whose overlapping degree is greater than a preset overlapping threshold are determined as two motion trajectories of a same target.

Optionally, each motion trajectory in the foregoing motion trajectory set may further include attribute information of a target. When whether two motion trajectories are motion trajectories of a same target is determined, on a basis of calculating an overlapping degree of the motion trajectories, verification may further be performed by using attribute information of targets that is carried in the two motion trajectories. If the overlapping degree is greater than the preset overlapping degree threshold and attribute information of the targets that is carried in the two motion trajectories is the same, it is considered that the two motion trajectories are motion trajectories of the same target. A sequence number of each target in the trajectory database may further correspond to attribute information of the target.

S303: Obtain traveling information of the intelligent vehicle, determine a region of interest (region of interest, ROI) of the intelligent vehicle based on the traveling information, and filter out a motion trajectory of a target outside the ROI in the trajectory database.

A system or a module in the intelligent vehicle may obtain the traveling information of the self-vehicle. The traveling information is information such as a location, a status, and performance of the intelligent vehicle at a current moment, or information that is stored in the self-vehicle and that can be used for intelligent driving. For example, a vehicle status monitoring module of the intelligent vehicle may obtain status information of the self-vehicle, for example, a traveling speed, a heading angle, and a status of a vehicle body sensor. A map management and vehicle positioning module may obtain location information of the vehicle and a high-definition map stored in the vehicle.

It should be understood that, in the embodiments of this application, the self-vehicle represents an intelligent vehicle that performs the motion trajectory prediction method provided in the embodiments of this application.

The ROI of the self-vehicle may be determined based on the driving information, and the ROI of the self-vehicle is a geographical range that is strongly correlated with driving of the self-vehicle at the current moment. A motion trajectory of a target in the ROI of the self-vehicle may affect traveling decision of the self-vehicle, for example, decision for a traveling direction and a traveling speed in a next period. Therefore, the intelligent vehicle needs to obtain a motion trajectory of a target in a range of the ROI in a current period. The ROI of the self-vehicle may be dynamically adjusted at each moment, and the ROI of the self-vehicle at one moment depends on any one or more types of information: the location of the self-vehicle, trajectory planning of the self-vehicle at a previous moment or a previous time period, and navigation path information of the self-vehicle (for example, lane change, left turn, right turn, on/off ramp, U-turn, crossing intersection). There may be a plurality of methods for determining the ROI of the self-vehicle based on the driving information. A specific implementation is not limited in this application. A manner of determining the ROI of the self-vehicle based on the driving information may alternatively vary based on different traffic roads on which the self-vehicle is located. The following two specific implementations are used as an example:
1. When the intelligent vehicle travels on a highway, a rectangular range around the intelligent vehicle may be determined as the ROI of the intelligent vehicle based on a traveling speed and a location of the intelligent vehicle.

For example, speed information V of the self-vehicle is obtained, a maximum braking distance M of the self-vehicle is calculated based on the speed information, and front and rear parallel lines that have the maximum braking distance with the self-vehicle that is used as a center are determined on a map as a front boundary and a rear boundary of the ROI of the self-vehicle. A left boundary line of the leftmost lane of the highway is used as a left boundary of the ROI of the self-vehicle, and a right boundary line of the rightmost lane of the highway is used as a right boundary of the ROI of the self-vehicle. Therefore, a range of the ROI of the self-vehicle at the current moment and a current location on the map is determined based on the front, rear, left, and right boundary lines of the ROI of the self-vehicle.

For another example, in another implementation, it is determined that a speed at which the intelligent vehicle travels on the highway at a current moment is V, and a current location of the intelligent vehicle in a lane S-L coordinate system is [S₀, L₀], where in the S-L coordinate system, a center line of a lane in which the intelligent vehicle is located is used as an S-axis, and a cross-sectional line of the lane is used as an L-axis. m is a lane width, a trajectory time window planned by the intelligent vehicle at each moment (or in each time period) is t (that is, a travel trajectory in t seconds in the future is planned each time), Lₛ is the center line of the lane in which the self-vehicle is located, L ₁ is a center line of a left lane of the highway, and L₋₁ is a center line of a right lane. In this case, it may be determined, based on the foregoing information, that a horizontal line of the ROI rectangular area of the intelligent vehicle is [L₋₁ - m/2, L₁ + m/2], and a vertical line of the ROI rectangular area of the intelligent vehicle is [S₀ - V * t, S₀ + 2V * t]. In this way, the ROI rectangular area of the intelligent vehicle at the current moment is obtained. The known horizontal line and vertical line of the ROI rectangular area in the S-L coordinate system may be converted into a location of the ROI rectangular area in a global coordinate system of the map based on a requirement.

2. When it is determined, based on the location information of the self-vehicle and the map, that the self-vehicle runs at the crossing intersection at the current moment, it is determined, based on the location information of the self-vehicle, that a circular area with the self-vehicle as a center and 100 meters as a radius on the map is the ROI of the self-vehicle. Alternatively, it is determined, based on the location information of the self-vehicle, that areas that include all sidewalks of the intersection on the map are the ROI of the self-vehicle.

Optionally, in another implementation, when the intelligent vehicle travels at an intersection, the ROI of the intelligent vehicle at the current moment may also be determined as a rectangular area. It is assumed that a speed at which the intelligent vehicle travels on the highway at a current moment is V, and a current location of the intelligent vehicle in a lane S-L coordinate system is [S₀, L₀], where in the S-L coordinate system, a center line of a lane in which the intelligent vehicle is located is used as an S-axis, and a cross-sectional line of the lane is used as an L-axis. m is a lane width, a trajectory time window planned by the intelligent vehicle at each moment (or in each time period) is t (that is, a travel trajectory in t seconds in the future is planned each time), Lₛ is the center line of the lane in which the self-vehicle is located, L₋₁ is a center line of a left lane of the highway, and L₋₁ is a center line of a right lane. In this case, it may be determined, based on the foregoing information, that a horizontal line of the ROI rectangular area of the intelligent vehicle is [L₀ - 2 * V * t, L₀ + 2 * V * t], and a vertical line of the ROI rectangular area of the intelligent vehicle is [S₀ - V * t, S₀ + 2V * t]. In this way, the ROI rectangular area of the intelligent vehicle at the current moment is obtained. The known horizontal line and vertical line of the ROI rectangular area in the S-L coordinate system may be converted into a location of the ROI rectangular area in a global coordinate system of the map based on a requirement. The obtained ROI area may be mapped to the map.

After the ROI of the intelligent vehicle at the current moment is obtained, a motion trajectory of a target not in the ROI of the intelligent vehicle in the trajectory database obtained in step S302 may be filtered out based on the ROI of the self-vehicle.

It should be noted that step S303 is an optional step in this application. In some other embodiments of predicting a motion trajectory in this application, step S303 may not be performed. Performing step S303 can reduce calculation for a target having relatively slight impact on traveling of the intelligent vehicle, reduce resource consumption, and improve a planned traveling speed of the intelligent vehicle.

S304: Select N motion trajectories of a first target from the trajectory database, where N is a positive integer, and the N motion trajectories of the first target are provided by N devices; and perform security detection on the motion trajectories of the first target.

Specifically, the first target selected from the trajectory database may be a target selected based on a sequence number of the target in the trajectory database.

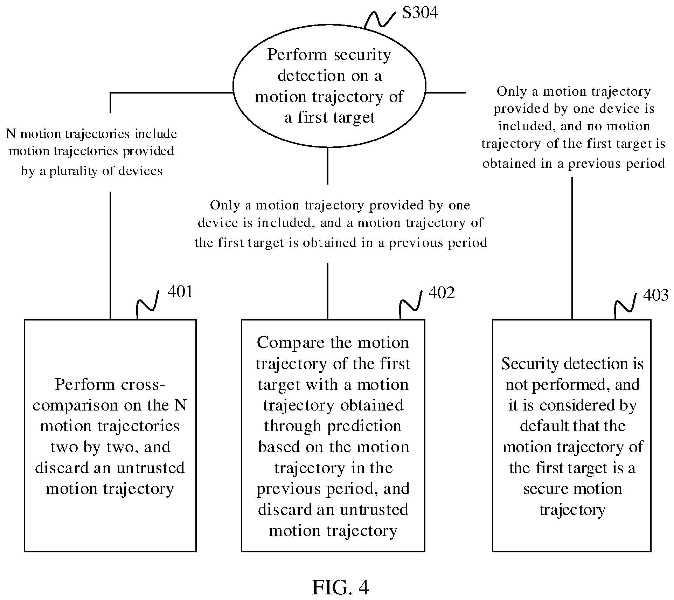

Methods for performing security detection on the N motion trajectories of the first target may be classified into different cases. Different security detection methods may be used in different cases. As shown in FIG. 4, the following 401 to 403 separately describe security detection methods in three cases.

401: In a case in which the N motion trajectories include motion trajectories provided by a plurality of devices, that is, N is greater than 1 (for example, a case in which a motion trajectory predicted by the intelligent vehicle for the first target is included and a motion trajectory that is of the first target and that is sent by another device to the intelligent vehicle is further included, or a case in which the motion trajectories of the first target include motion trajectories that are of the first target and that are sent by a plurality of devices to the intelligent vehicle), perform cross-comparison on all motion trajectories of the first target to determine whether there is an untrusted motion trajectory, for example, a jumping motion trajectory or a forged motion trajectory, in the motion trajectories of the first target, and discard the untrusted motion trajectory. A cross-comparison manner is not limited in this application. For example, a degree of overlapping between two motion trajectories may be calculated, a motion trajectory whose degree of overlapping with a motion trajectory provided by another device is less than a threshold is discarded, and a secure motion trajectory is reserved.

Optionally, a motion trajectory that is of the first target and that is provided by each device may further be compared with a motion trajectory obtained by the intelligent vehicle by performing extrapolation prediction on a motion trajectory that is of the first target and that is obtained in a previous period.

402: In a case in which the N motion trajectories include only a motion trajectory provided by one device, that is, N = 1, and the intelligent vehicle obtains a motion trajectory of the first target in a previous period, compare the motion trajectory that is of the first target and that is provided by the device with a motion trajectory obtained by the intelligent vehicle by performing extrapolation prediction on a motion trajectory that is of the first target and that is obtained in a previous period, to determine whether the motion trajectory of the first target can be trusted, for example, determine whether the motion trajectory is a jumping motion trajectory or a forged motion trajectory, and if the motion trajectory is a jumping motion trajectory or a forged motion trajectory, discard the motion trajectory, and reserve a secure motion trajectory.

403: In a case in which the N motion trajectories include only a motion trajectory provided by one device, that is, N = 1, and the intelligent vehicle does not obtain a motion trajectory of the first target in a previous period, directly determine the motion trajectory of the first target as a secure motion trajectory. In other words, security detection is not performed, and it is considered by default that the motion trajectory of the first target is a secure motion trajectory.

It should be noted that step S304 is an optional step in this application. In some other embodiments of predicting a motion trajectory in this application, step S304 may not be performed. Accuracy of an to-be-applied motion trajectory that is of the first target and that is obtained in this application can be improved by performing step S304. This further improves traveling safety of the intelligent vehicle.

S305: Obtain an to-be-applied motion trajectory of the first target based on types of the N motion trajectories of the first target.

It can be learned from the foregoing that the N motion trajectories of the first target are motion includes trajectories provided by the N devices. The N motion trajectories a motion trajectory obtained by a device through prediction based on information about the first target that is perceived by the device. A type of this motion trajectory is referred to as a prediction trajectory type. The N motion trajectories of the first target further includes a motion trajectory obtained by the first target by planning traveling of the first target based on a traveling trajectory of a target around the first target. A type of this motion trajectory is referred to as a planning trajectory type.

It should be understood that the N motion trajectories of the first target are all motion trajectories of includes the prediction trajectory type, or both a motion trajectory that is of the prediction trajectory type and that is predicted by another device for the first target and a motion trajectory that is of the planning trajectory type and that is planned by the first target. In some embodiments, a first target on a road may be a vehicle that has a computing capability, a perception capability, and a communication capability (that is, the vehicle is also an intelligent vehicle that can autonomously plan a traveling trajectory). For the first target, the first target plans a traveling trajectory of the first target based on a traveling trajectory of a target in a perception area. In addition, the first target traveling on the road may be perceived by another device around the first target, and the another device predicts a vehicle of the first target, to obtain a predicted motion trajectory of the first target. In this way, the intelligent vehicle receives a motion trajectory set (including the motion trajectory planned by the first target) sent by the first target, and the intelligent vehicle further receives a motion trajectory set sent by the another device. According to the foregoing step S302, the N motion trajectories of the first target may be obtained from the trajectory database. Therefore, the motion trajectories of the first target include both the motion trajectory planned by the first target and the motion trajectory predicted by the another device.

It should be understood that, the foregoing steps S304 and S305 are correspondingly performed once on a motion trajectory of each target in the trajectory database, and after the foregoing steps S304 and S305 are performed on each target in the trajectory database, obtained applied motion trajectories of a plurality of targets jointly form an to-be-applied motion trajectory set in a current period. It should be understood that the foregoing steps S301 to S305 are performed in each period. In this way, in each period, the intelligent vehicle may obtain an to-be-applied motion trajectory set.

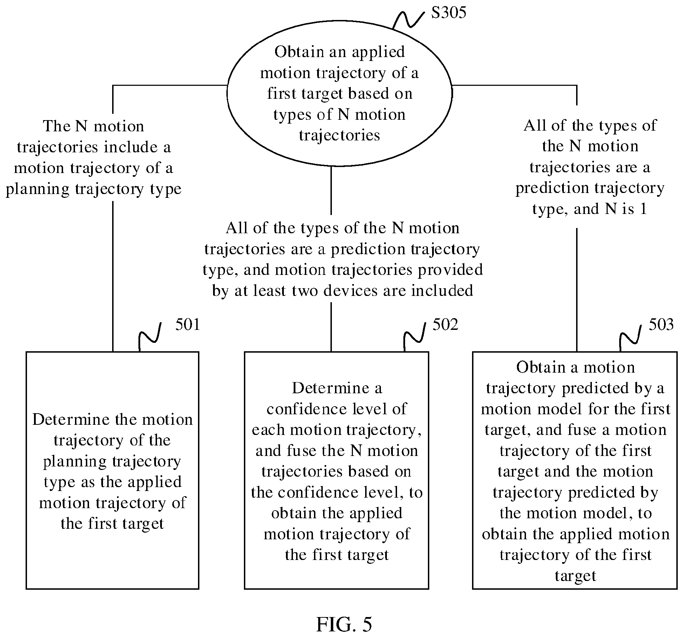

Different types of the N motion trajectories of the first target lead to different methods for obtaining the to-be-applied motion trajectory of the first target. With reference to FIG. 5, the following describes three cases corresponding to the following 501 to 503.

501: When the types of the N motion trajectories of the first target include the planning trajectory type, determine a motion trajectory whose type is the planning trajectory type as the to-be-applied motion trajectory of the first target. Because a motion trajectory planned by the first target for the first target is a trajectory along which the first target plans to travel in the future, accuracy of the motion trajectory planned by the first target for the first target is higher than accuracy of a motion trajectory predicted by another device for the first target. Therefore, the intelligent vehicle may use the motion trajectory planned by the first target for the first target as the to-be-applied motion trajectory of the first target, and the to-be-applied motion trajectory of the first target is used for subsequent traveling decision and trajectory planning of the intelligent vehicle.

502: When all of the types of the N motion trajectories of the first target are the prediction trajectory type, and the motion trajectories of the first target include motion trajectories provided by at least two devices (that is, N is greater than 1), determine a confidence level of each of the N motion trajectories, and fuse the N motion trajectories based on the confidence level of each motion trajectory of the first target, to obtain the to-be-applied motion trajectory of the first target.

The confidence level of each motion trajectory of the first target indicates a degree of trustworthiness of the intelligent vehicle for accuracy of a motion trajectory that is of the first target and that is collected by a different device. For example, in this case, the N motion trajectories of the first target may include three types: a motion trajectory predicted by a road side unit and sent by the road side unit, a motion trajectory predicted by a surrounding vehicle and sent by the surrounding vehicle, and a motion trajectory predicted by the intelligent vehicle by using a sensor system and an in-vehicle computing system of the self-vehicle.

In some embodiments, it may be considered that confidence levels of motion trajectory sets from different devices are different, and confidence levels of motion trajectories of all targets in a motion trajectory set provided by a same device are the same. Therefore, confidence levels of motion trajectory sets provided by different devices may be determined, to obtain a confidence level of a motion trajectory of a target in each motion trajectory set.

At a specific moment, a confidence level of a motion trajectory set provided by each device may be preset or dynamically updated. Determining a confidence level of each motion trajectory of the first target is specifically: determining a device corresponding to a motion trajectory set to which each motion trajectory of the first target belongs, and determining a confidence level of a motion trajectory set provided by the device in a current period, where a confidence level of a motion trajectory of the first target in the motion trajectory set is a confidence level of the motion trajectory set. A weight of each motion trajectory of the first target may be determined based on the confidence level of each motion trajectory of the first target. In this way, a plurality of motion trajectories of the first target that have respective weights may be obtained, and the weight of each motion trajectory of the first target may be used to fuse the plurality of motion trajectories of the target.

It should be noted that, according to historical experience, a confidence level of a motion trajectory set autonomously obtained by the intelligent vehicle is the highest. Because a sensor system of a road side unit in a surrounding environment of the intelligent vehicle is relatively stable, a confidence level of a motion trajectory set provided by the road side unit in the surrounding environment is higher than a confidence level of a motion trajectory set obtained by a vehicle in the surrounding environment.

The confidence level of the motion trajectory set autonomously obtained by the intelligent vehicle may be represented by *Wₑ,* the confidence level of the motion trajectory set provided by the vehicle in the surrounding environment of the intelligent vehicle may be represented by *Wₐ,* and the confidence level of the motion trajectory set provided by the road side unit in the surrounding environment of the intelligent vehicle may be represented by *Wᵣ.* In some embodiments, confidence levels of motion trajectory sets from different devices may be preset with reference to the foregoing historical experience. For example, preset confidence levels satisfy the following conditions: Wₑ > 0.5; Wᵣ = *β* * *Wₐ*, where β is greater than or equal to 1; and ΣWᵣ + ΣWₐ + Wₑ = 1. On a basis of satisfying the foregoing three conditions, the confidence levels of Wᵣ, Wₐ, Wₑ may be separately determined according to experience.

Optionally, after the confidence levels of the motion trajectory sets from different devices are initially determined according to experience, confidence levels of motion trajectory sets from the different devices in a subsequent period may further be dynamically determined based on a degree of matching between a motion trajectory that is of a target in each motion trajectory set in a previous period and that is received by the intelligent vehicle and a motion trajectory of the target in an to-be-applied motion trajectory set obtained in the previous period, and a confidence level of a motion trajectory set provided by each device in the previous period.

A specific method for dynamically determining a confidence level is: traversing motion trajectory sets obtained by the intelligent vehicle in the previous period, calculating an intersection set between a motion trajectory set provided by each device and the to-be-applied motion trajectory set obtained in the previous period, and obtaining a quantity of motion trajectories of targets in each intersection set. The obtained quantity of motion trajectories of the targets in the intersection set is a quantity of motion trajectories that are of targets perceived by the device and that successfully match targets in the to-be-applied motion trajectory set.

All quantities are normalized based on a quantity of successfully matched motion trajectories in the motion trajectory set from each device in the previous period, so that ΣWᵣ + ΣWₐ + Wₑ = 1. A confidence level of a motion trajectory set corresponding to each device in the current period is comprehensively calculated.

Another specific method for dynamically determining a confidence level may be: traversing motion trajectory sets obtained by the intelligent vehicle from all devices in the previous period, and calculating an average value of overall distances between motion trajectories of same targets in a motion trajectory set provided by each device and the to-be-applied motion trajectory set obtained in the previous period. For example, in the previous period, if the intelligent vehicle obtains motion trajectory sets: a set H, a set J, and a set K, provided by three devices, an average value of overall distances between motion trajectories of targets in each of the three motion trajectory sets H, J, and K and information about the same corresponding targets in the to-be-applied motion trajectory set is first obtained, to separately obtain average values of overall distances for the three motion trajectory sets. The obtained average value of the overall distances may reflect a difference between a motion trajectory that is of a target and that is provided by each device and a final motion trajectory of the same target. Because the final motion trajectory of the target is considered to be more reliable, a smaller average value of overall distances indicates a smaller difference between the motion trajectory that is of the target and that is predicted by the device and the final motion trajectory of the target, and it may be considered that the motion trajectory that is of the target and that is obtained by the device has a higher confidence level.

A confidence level of a motion trajectory set provided by a corresponding device is updated based on the foregoing obtained average value of overall distances corresponding to the device. An update principle is as follows: If an average value of overall distances is higher, a confidence level is correspondingly reduced, and if an average value of overall distances is lower, a confidence level is correspondingly increased. Overall confidence levels should satisfy ΣWᵣ + ΣWₐ + Wₑ = 1. A specific value by which confidence level data is increased or reduced may be determined according to different environments or historical experience. This is not limited in this application.

In this way, an updated confidence level of a motion trajectory set from each device is obtained based on a degree of matching between a motion trajectory of a target in a motion trajectory set from each device in the previous period and a motion trajectory of the same corresponding target in the to-be-applied motion trajectory set in the previous period, and a confidence level of the motion trajectory set from each device in the previous period. The updated confidence level of the motion trajectory set from each device may be used to fuse motion trajectories of a target in motion trajectory sets from all devices that are obtained in the current period.

Based on confidence levels of all motion trajectories of the first target, all the motion trajectories of the first target may be fused to obtain the to-be-applied motion trajectory of the first target.

It should be understood that, in an embodiment, when the motion trajectories of the first target are fused, spatial fusion may be performed on all the motion trajectories of the first target in the current period. For example, in a weighted fusion manner, a weight of each motion trajectory of the first target is determined based on the confidence level of each motion trajectory of the first target, and then a value of each point in the motion trajectory of the first target is calculated through weighting based on the weight, to obtain the to-be-applied motion trajectory. The obtained to-be-applied motion trajectory of the first target in the current period may be used for traveling decision and trajectory planning of the intelligent vehicle.

Optionally, when the motion trajectories of the first target are fused, multi-layer fusion in time and space may be further performed on the motion trajectories of the first target by using some algorithms. A multi-layer fusion method may be one or more of existing algorithms for prediction, such as the D-S evidence theory, nearest neighbor (nearest neighbor, NN), Kalman filtering (Kalman filtering, KF), and Bayes filtering (Bayes filtering). A specific fusion method is not limited in this application.

503: When the N motion trajectories of the first target include only a motion trajectory that is provided by one device and whose type is the prediction trajectory type (that is, all of the types of the N motion trajectories are the prediction trajectory type, and N is 1), obtain a motion trajectory predicted by a motion model for the first target, where the motion model is constructed based on a historical motion trajectory of the first target; and fuse the motion trajectory of the first target and the motion model predicted by the motion model for the first target, to obtain the to-be-applied motion trajectory of the first target.

Specifically, when the N motion trajectories of the first target include only the motion trajectory that is provided by one device and whose type is the prediction trajectory type, it may be further determined whether the intelligent vehicle has constructed the motion model for the first target (that is, whether the intelligent vehicle has obtained a motion trajectory of the first target in a historical period).
1. If the intelligent vehicle has the motion model of the first target, the motion trajectory predicted by the motion model for the first target is obtained based on the motion model. Then, the motion trajectory that is of the first target and that is provided by the device and the motion trajectory predicted by the motion model for the first target are fused, to obtain the to-be-applied motion trajectory of the first target.

The foregoing motion model of the first target may be obtained through modeling or fitting based on the motion trajectory that is of the first target and that is obtained by the intelligent vehicle in the historical period. For example, the intelligent vehicle obtains a motion trajectory of the first target in all of 3 minutes before a current moment, and the obtained motion trajectory of the target includes a motion trajectory of the first target in a time period from a moment that is 3 minutes before the current moment to a moment that is 30 seconds after the current moment. The intelligent vehicle may perform modeling based on the motion trajectory in the 3 minutes and 30 seconds, to obtain the motion model of the first target. Then, based on the motion model, the intelligent vehicle may further obtain a predicted motion trajectory in a time period from the moment that is 30 seconds after the current moment to a moment that is 1 minute after the current moment. A motion trajectory that is of the first target and that is provided by a device includes a motion trajectory that is calculated by the device for the first target and that is in future 1 minute from the current moment.

The foregoing motion model obtained through modeling or fitting based on the motion trajectory that is of the first target and that is obtained by the intelligent vehicle in the historical period further has a confidence level, and the confidence level of the motion model represents a confidence level of the motion trajectory predicted by the motion model. An initial confidence level of the constructed motion model is a preset value, and the confidence level of the motion model may be updated in each period. A specific update method is as follows: The confidence level of the motion model is updated based on a difference between a motion trajectory predicted by the motion model for the first target in the period and a final trajectory of the first target in the period. If the difference is larger, the confidence level of the motion model is updated to be lower, or if the difference is smaller, the confidence level of the motion model is updated to be higher. Further, a parameter of the motion model may be updated in each period based on the difference between the motion trajectory predicted by the motion model for the first target in the period and the final trajectory of the first target in the period.

In this way, the motion trajectory that is of the first target and that is provided by the device and the motion trajectory predicted by the motion model for the first target may be further fused, to obtain the to-be-applied motion trajectory of the first target. For example, fusion may be performed on a motion trajectory that is provided by the device and that is of the first target in further 1 minute from the current moment and a motion trajectory that is predicted by the motion model and that is in further 1 minute from the current moment.

The foregoing method for fusing the two motion trajectories of the first target is similar to the fusion method in the second case, and details are not described herein again. It should be noted that a confidence level of the motion trajectory that is of the first target and that is provided by the device is still obtained according to the confidence level determining method described in the second case. A confidence level of the motion trajectory predicted by the motion model for the first target is the confidence level of the motion model.

2. If the intelligent vehicle has no motion model of the first target, the motion trajectory that is of the first target and that is provided by the one device is used as the to-be-applied motion trajectory of the first target, and a motion model corresponding to the first target is constructed based on the motion trajectory of the first target.

According to the method in S305, the to-be-applied motion trajectory of the first target in the current period may be obtained. It should be understood that, in a period, operations corresponding to steps S304 and S305 may be performed on a motion trajectory of each target in the trajectory database obtained in S302. In this way, the intelligent vehicle can learn of applied motion trajectories of targets in the surrounding environment in a period. The applied motion trajectories of the targets in the surrounding environment represent location points of these targets at a current moment and traveling trajectories of these targets in a future time period. The in-vehicle computing system of the intelligent vehicle may perform traveling decision and trajectory planning of the intelligent vehicle in a future time period based on the obtained applied motion trajectories of these targets.

This application further provides an apparatus 600, and the apparatus 600 may be configured to perform the motion trajectory prediction method provided in the embodiments of this application. The apparatus 600 includes an obtaining unit 601 and a processing unit 602.

The obtaining unit 601 is configured to obtain N motion trajectories of a first target, where the N motion trajectories are provided by N devices, and N is a positive integer.

The processing unit 602 is configured to determine an to-be-applied motion trajectory of the first target based on types of the N motion trajectories, where the to-be-applied motion trajectory of the first target is used for traveling decision of an intelligent vehicle.

A type of a motion trajectory includes a prediction trajectory type and a planning trajectory type, the prediction trajectory type indicates that the motion trajectory is a motion trajectory obtained by a device by performing prediction based on information about a target, and the planning trajectory type indicates that the motion trajectory is a motion trajectory obtained by performing trajectory planning on the target.

Optionally, when all of the types of the N motion trajectories are the prediction trajectory type, and N is greater than 1, the processing unit 602 is specifically configured to: determine a confidence level of each motion trajectory; and fuse the N motion trajectories based on the confidence level of each motion trajectory, to obtain the to-be-applied motion trajectory of the first target.

Optionally, when all of the types of the N motion trajectories are the prediction trajectory type, and N is equal to 1, the processing unit 602 is specifically configured to: obtain a motion trajectory predicted by a motion model for the first target, where the motion model is constructed based on a historical motion trajectory of the first target; and fuse the N motion trajectories and the motion trajectory predicted by the motion model for the first target, to obtain the to-be-applied motion trajectory of the first target.

Optionally, when the types of the N motion trajectories include the planning trajectory type, the processing unit 602 is specifically configured to determine a motion trajectory whose type is the planning trajectory type in the N motion trajectories as the to-be-applied motion trajectory of the first target.

Optionally, the processing unit 602 is further configured to: perform security detection on the N motion trajectories, and discard an untrusted motion trajectory of the first target.

Optionally, the processing unit 602 is further configured to: obtain L motion trajectory sets, where L is greater than or equal to N; determine a region of interest ROI of the intelligent vehicle based on traveling information of the intelligent vehicle; screen, based on the ROI, out a motion trajectory that is not in the ROI in each motion trajectory set; and obtain the N motion trajectories of the first target based on L motion trajectory sets obtained after screening.

Optionally, the confidence level of each motion trajectory is a confidence level of a motion trajectory set to which each motion trajectory belongs; and the processing unit 602 is further configured to: calculate a degree of matching between a motion trajectory of a target in each motion trajectory set in a previous period and a motion trajectory of a corresponding target in an to-be-applied motion trajectory set in the previous period; and determine, based on the matching degree, a confidence level of a motion trajectory set to which each motion trajectory in a current period belongs.

Optionally, the confidence level of the motion trajectory set to which each motion trajectory belongs may further be determined based on an attribute of a device corresponding to the motion trajectory set.

In some other embodiments, the apparatus 600 is configured to perform the method embodiment described in FIG. 3 to FIG. 5. Specifically, the obtaining unit 601 is configured to perform related steps of data or information obtaining, and the processing unit 602 is configured to perform related steps of processing (such as fusion, confidence level determining, screening on a motion trajectory in the ROI, and security check).

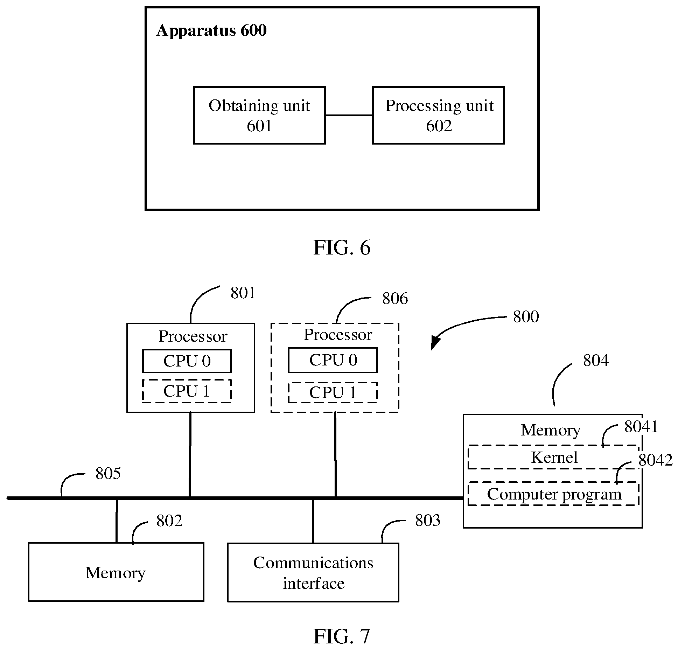

This application further provides an in-vehicle computing system. The in-vehicle computing system may be configured to perform the method embodiment described in FIG. 3 to FIG. 5, or may implement a function of the apparatus 600 shown in FIG. 6.

This application further provides the intelligent vehicle 100 shown in FIG. 1 or FIG. 2. The intelligent vehicle 100 may perform the method embodiment described in FIG. 3 to FIG. 5, or may implement a function of the apparatus 600 shown in FIG. 6.

This application further provides a device 800, and the device may be a vehicle-mounted device. As shown in FIG. 7, the device 800 includes a processor 801, a memory 802, a communications interface 803, and memory 804. The device 800 may be a vehicle-mounted device installed in an intelligent vehicle. The processor 801, the memory 802, the communications interface 803, and the memory 804 communicate through a bus 805. The memory 802 stores program code, and the processor 801 may invoke the program code stored in the memory 802 to perform the operations shown in FIG. 3 to FIG. 5 in the foregoing embodiment, and/or implement a function of the foregoing apparatus 600.

It should be understood that, in this embodiment of this application, the processor 801 may be a CPU, or the processor 801 may be another general-purpose processor, a digital signal processor (digital signal processing, DSP), an application-specific integrated circuit (ASIC), a field programmable gate array (FPGA) or another programmable logic device, a discrete gate or transistor logic device, a discrete hardware component, or the like. The general-purpose processor may be a microprocessor, any conventional processor, or the like.

Optionally, the device 800 may include a plurality of processors. For example, FIG. 7 includes a processor 801 and a processor 806. The processor 801 and the processor 806 may be different types of processors, and each type of processor includes one or more chips.

The memory 802 may include a read-only memory and a random access memory, and provide instructions and data to the processor 801. The memory 802 may further include a non-volatile random access memory. For example, the memory 802 may further store a motion trajectory set or the memory 802 may further store a trajectory database.

The memory 802 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 804 may further include a power bus, a control bus, a status signal bus, and the like. However, for clear description, various types of buses in the figure are marked as the bus 804. Optionally, the bus 804 may alternatively be an in-vehicle Ethernet bus, a controller area network (controller area network, CAN) bus, or another internal bus.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer instructions are loaded and executed on a computer, the procedure or functions according to the embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

## Claims

1. A motion trajectory prediction method, wherein the method is applied to an intelligent vehicle and comprises:
obtaining N motion trajectories of a first target, wherein the N motion trajectories are provided by N devices, and N is a positive integer greater than 1; and
determining a to-be-applied motion trajectory of the first target based on types of the N motion trajectories, wherein the to-be-applied motion trajectory of the first target is used for traveling decision of the intelligent vehicle, wherein a type of a motion trajectory comprises a prediction trajectory type and a planning trajectory type,
the prediction trajectory type indicates that the motion trajectory is obtained by a device through prediction based on information about the first target that is perceived by the device,
the planning trajectory type indicates that the motion trajectory is obtained by
the first target by planning traveling of the first target based on a traveling trajectory of a target around the first target,
**characterized in that**, the determining a to-be-applied motion trajectory of the first target based on types of the N motion trajectories comprises a) or b):
a) when the types of the N motion trajectories comprise both the planning trajectory type and the prediction trajectory type, determining a motion trajectory whose type is the planning trajectory type in the N motion trajectories as the to-be-applied motion trajectory of the first target;
b) when all of the types of the N motion trajectories are the prediction trajectory type,
determining a confidence level of each motion trajectory; and
fusing the N motion trajectories based on the confidence level of each motion trajectory, to obtain the to-be-applied motion trajectory of the first target.

2. The method according to claim 1, wherein the N motion trajectories are from N motion trajectory sets provided by the N devices, each motion trajectory set comprises motion trajectories that are of M targets and that are collected by each device, and M is a positive integer.

3. The method according to any one of claims 1 to 2, wherein before the determining an to-be-applied motion trajectory of the first target based on types of the N motion trajectories, the method further comprises:
performing security detection on the N motion trajectories, and discarding an untrusted motion trajectory of the first target.

4. The method according to any one of claims 1 to 3, wherein the method further comprises:
obtaining L motion trajectory sets, wherein L is greater than or equal to N;
determining a region of interest, ROI, of the intelligent vehicle based on traveling information of the intelligent vehicle;
screening, based on the ROI, out a motion trajectory that is not in the ROI in each motion trajectory set; and
obtaining the N motion trajectories of the first target based on L motion trajectory sets obtained after screening.

5. The method according to option b) of claim 1, wherein the confidence level of each motion trajectory is a confidence level of a motion trajectory set to which each motion trajectory belongs; and
the method further comprises:
calculating a degree of matching between a motion trajectory of a target in each motion trajectory set in a previous period and a motion trajectory of a corresponding target in an to-be-applied motion trajectory set in the previous period; and
determining, based on the matching degree, a confidence level of a motion trajectory set to which each motion trajectory in a current period belongs.

6. The method according to option b) of claim 1, wherein the confidence level of each motion trajectory is a confidence level of a motion trajectory set to which each motion trajectory belongs, and the confidence level of the motion trajectory set to which each motion trajectory belongs is determined based on an attribute of a device having generated and thus corresponding to the motion trajectory set.

7. An apparatus, which is configured to perform the method according to any one of claims 1 to 6.

8. A device, comprising a processor and a memory, wherein the memory stores program code, and the processor executes the program code, so that the device performs the method according to any one of claims 1 to 7.

9. A computer-readable storage medium, wherein the computer-readable storage medium stores computer program code, and when the computer program code is executed by a computing device, the computing device performs the method according to any one of claims 1 to 6.

10. A computer program product when executed by a processor, causes the processor to carry out the steps of the method of any one of claims 1 to 6.

## Patentansprüche

1. Verfahren zur Vorhersage einer Bewegungsbahn, wobei das Verfahren auf ein intelligentes Fahrzeug angewendet wird und Folgendes umfasst:
Erlangen von N Bewegungsbahnen eines ersten Ziels, wobei die N Bewegungsbahnen von N Vorrichtungen bereitgestellt werden und N eine positive ganze Zahl größer als 1 ist; und
Bestimmen einer anzuwendenden Bewegungsbahn des ersten Ziels basierend auf Typen der N Bewegungsbahnen, wobei die anzuwendende Bewegungsbahn des ersten Ziels zur Fahrtentscheidung des intelligenten Fahrzeugs verwendet wird, wobei ein Typ einer Bewegungsbahn einen Vorhersagebahntyp und einen Planungsbahntyp umfasst,
wobei der Vorhersagebahntyp angibt, dass die Bewegungsbahn von einer Vorrichtung durch Vorhersage basierend auf Informationen über das erste Ziel, das von der Vorrichtung wahrgenommen wird, erlangt wird,
wobei der Planungsbahntyp angibt, dass die Bewegungsbahn von dem ersten Ziel durch Planen eines Fahrens des ersten Ziels basierend auf einer Fahrtbahn eines Ziels um das erste Ziel herum erlangt wird,
**dadurch gekennzeichnet, dass** das Bestimmen einer anzuwendenden Bewegungsbahn des ersten Ziels basierend auf Typen der N Bewegungsbahnen a) oder b) umfasst:
a) wenn die Typen der N Bewegungsbahnen sowohl den Planungsbahntyp als auch den Vorhersagebahntyp umfassen, Bestimmen einer Bewegungsbahn, deren Typ der Planungsbahntyp in den N Bewegungsbahnen ist, als die anzuwendende Bewegungsbahn des ersten Ziels;
b) wenn alle Typen der N Bewegungsbahnen der Vorhersagebahntyp sind,
Bestimmen eines Konfidenzniveaus jeder Bewegungsbahn; und
Zusammenführen der N Bewegungsbahnen basierend auf dem Konfidenzniveau jeder Bewegungsbahn, um die anzuwendende Bewegungsbahn des ersten Ziels zu erlangen.

2. Verfahren nach Anspruch 1, wobei die N Bewegungsbahnen aus N von den N Vorrichtungen bereitgestellten Bewegungsbahnsätzen sind, jeder Bewegungsbahnsatz Bewegungsbahnen umfasst, die von M Zielen sind und die von jeder Vorrichtung gesammelt werden, und M eine positive ganze Zahl ist.

3. Verfahren nach einem der Ansprüche 1 bis 2, wobei das Verfahren vor dem Bestimmen einer anzuwendenden Bewegungsbahn des ersten Ziels basierend auf Typen der N Bewegungsbahnen ferner Folgendes umfasst:
Durchführen der Sicherheitserkennung an den N Bewegungsbahnen und Verwerfen einer nicht vertrauenswürdigen Bewegungsbahn des ersten Ziels.

4. Verfahren nach einem der Ansprüche 1 bis 3, wobei das Verfahren ferner Folgendes umfasst:
Erlangen von L Bewegungsbahnsätzen, wobei L größer oder gleich N ist;
Bestimmen einer Region von Interesse (ROI) des intelligenten Fahrzeugs basierend auf Fahrtinformationen des intelligenten Fahrzeugs;
Ausschließen einer Bewegungsbahn, die nicht in der ROI ist, in jedem Bewegungsbahnsatz basierend auf der ROI; und
Erlangen der N Bewegungsbahnen des ersten Ziels basierend auf nach dem Ausschließen erlangten L Bewegungsbahnsätzen.

5. Verfahren nach Option b) nach Anspruch 1, wobei das Konfidenzniveau jeder Bewegungsbahn ein Konfidenzniveau eines Bewegungsbahnsatzes ist, zu dem jede Bewegungsbahn gehört; und das Verfahren ferner Folgendes umfasst:
Berechnen eines Übereinstimmungsgrades zwischen einer Bewegungsbahn eines Ziels in jedem Bewegungsbahnsatz in einer vorherigen Periode und einer Bewegungsbahn eines entsprechenden Ziels in einem anzuwendenden Bewegungsbahnsatz in der vorherigen Periode; und
Bestimmen eines Konfidenzniveaus eines Bewegungsbahnsatzes, zu dem jede Bewegungsbahn in einer aktuellen Periode gehört, basierend auf dem Übereinstimmungsgrad.

6. Verfahren nach Option b) nach Anspruch 1, wobei das Konfidenzniveau jeder Bewegungsbahn ein Konfidenzniveau eines Bewegungsbahnsatzes ist, zu dem jede Bewegungsbahn gehört, und das Konfidenzniveau des Bewegungsbahnsatzes, zu dem jede Bewegungsbahn gehört, basierend auf einem Attribut einer Vorrichtung bestimmt wird, die den Bewegungsbahnsatz erzeugt hat und somit diesem entspricht.

7. Einrichtung, die konfiguriert ist, um das Verfahren nach einem der Ansprüche 1 bis 6 durchzuführen.

8. Vorrichtung, umfassend einen Prozessor und einen Speicher, wobei der Speicher Programmcode speichert und der Prozessor den Programmcode ausführt, sodass die Vorrichtung das Verfahren nach einem der Ansprüche 1 bis 7 durchführt.

9. Computerlesbares Speichermedium, wobei das computerlesbare Speichermedium Computerprogrammcode speichert und die Rechenvorrichtung, wenn der Computerprogrammcode von einer Rechenvorrichtung ausgeführt wird, das Verfahren nach einem der Ansprüche 1 bis 6 durchführt.

10. Computerprogrammprodukt, das, wenn es von einem Prozessor ausgeführt wird, den Prozessor veranlasst, die Schritte des Verfahrens nach einem der Ansprüche 1 bis 6 durchzuführen.

## Revendications

1. Procédé de prédiction de trajectoire de mouvement, dans lequel le procédé est appliqué à un véhicule intelligent et comprenant :
l'obtention de N trajectoires de mouvement d'une première cible, dans lequel les N trajectoires de mouvement sont fournies par N dispositifs, et N est un entier positif supérieur à 1 ; et
la détermination d'une trajectoire de mouvement à appliquer de la première cible sur la base des types de N trajectoires de mouvement, dans lequel la trajectoire de mouvement à appliquer de la première cible est utilisée pour la décision de déplacement du véhicule intelligent, dans lequel un type de trajectoire de mouvement comprend un type de trajectoire de prédiction et un type de trajectoire de planification,
le type de trajectoire de prédiction indique que la trajectoire de mouvement est obtenue par un dispositif grâce à une prédiction sur la base d'informations sur la première cible qui est perçue par le dispositif,
le type de trajectoire de planification indique que la trajectoire de mouvement est obtenue par la première cible en planifiant le déplacement de la première cible sur la base d'une trajectoire de déplacement d'une cible autour de la première cible,
**caractérisé en ce que** la détermination d'une trajectoire de mouvement à appliquer à la première cible sur la base des types de N trajectoires de mouvement comprend a) ou b) :
a) lorsque les types des N trajectoires de mouvement comprennent à la fois le type de trajectoire de planification et le type de trajectoire de prédiction, la détermination d'une trajectoire de mouvement dont le type est le type de trajectoire de planification dans les N trajectoires de mouvement comme la trajectoire de mouvement à appliquer de la première cible ;
b) lorsque tous les types des N trajectoires de mouvement sont du type de trajectoire de prédiction,
la détermination d'un niveau de confiance pour chaque trajectoire de mouvement ; et
la fusion des N trajectoires de mouvement sur la base du niveau de confiance de chaque trajectoire de mouvement, pour obtenir la trajectoire de mouvement à appliquer de la première cible.

2. Procédé selon la revendication 1, dans lequel les N trajectoires de mouvement proviennent de N ensembles de trajectoires de mouvement fournis par les N dispositifs, chaque ensemble de trajectoires de mouvement comprend des trajectoires de mouvement qui sont de M cibles et qui sont collectées par chaque dispositif, et M est un entier positif.

3. Procédé selon l'une quelconque des revendications 1 et 2, dans lequel, avant la détermination d'une trajectoire de mouvement à appliquer de la première cible sur la base de types des N trajectoires de mouvement, le procédé comprend également : la réalisation d'une détection de sécurité sur les N trajectoires de mouvement et le rejet d'une trajectoire de mouvement non fiable de la première cible.

4. Procédé selon l'une quelconque des revendications 1 à 3, dans lequel le procédé comprend également :
l'obtention de L ensembles de trajectoires de mouvement, dans lequel L est supérieur ou égal à N ;
la détermination d'une région d'intérêt, ROI, du véhicule intelligent sur la base d'informations de déplacement du véhicule intelligent ;
le filtrage, sur la base de la ROI, pour éliminer une trajectoire de mouvement qui ne se trouve pas dans la ROI dans chaque ensemble de trajectoires de mouvement ; et
l'obtention des N trajectoires de mouvement de la première cible sur la base de L ensembles de trajectoires de mouvement obtenus après le filtrage.

5. Procédé selon l'option b) de la revendication 1, dans lequel le niveau de confiance de chaque trajectoire de mouvement est un niveau de confiance d'un ensemble de trajectoires de mouvement auquel appartient chaque trajectoire de mouvement ; et
le procédé comprend également :
le calcul du degré de correspondance entre une trajectoire de mouvement d'une cible dans chaque ensemble de trajectoires de mouvement d'une période précédente et une trajectoire de mouvement d'une cible correspondante dans un ensemble de trajectoires de mouvement à appliquer d'une période précédente ; et
la détermination, sur la base du degré de correspondance, d'un niveau de confiance d'un ensemble de trajectoires de mouvement auquel chaque trajectoire de mouvement au cours d'une période donnée appartient.

6. Procédé selon l'option b) de la revendication 1, dans lequel le niveau de confiance de chaque trajectoire de mouvement est un niveau de confiance d'un ensemble de trajectoires de mouvement auquel chaque trajectoire de mouvement appartient, et le niveau de confiance de l'ensemble de trajectoires de mouvement auquel chaque trajectoire de mouvement appartient est déterminé sur la base d'un attribut d'un dispositif ayant généré et correspondant ainsi à l'ensemble de trajectoires de mouvement.

7. Appareil, configuré pour réaliser le procédé selon l'une quelconque des revendications 1 à 6.

8. Dispositif comprenant un processeur et une mémoire, dans lequel la mémoire stocke un code de programme et le processeur exécute le code de programme, de sorte que le dispositif réalise le procédé selon l'une quelconque des revendications 1 à 7.

9. Support de stockage lisible par ordinateur, dans lequel le support de stockage lisible par ordinateur stocke un code de programme informatique, et lorsque le code de programme informatique est exécuté par un dispositif informatique, le dispositif informatique réalise le procédé selon l'une quelconque des revendications 1 à 6.

10. Produit de programme informatique, qui lorsqu'il est exécuté par un processeur, amène le processeur à effectuer les étapes du procédé selon l'une quelconque des revendications 1 à 6.
